# EUROPEAN PATENT SPECIFICATION

(11) **EP 0 558 210 B1**
(45) Date of publication and mention of the grant of the patent: **23.04.1997**
(21) Application number: 93301051.4
(22) Date of filing: 15.02.1993
(51) Int. Cl.: H04B 7/005

(54) **Radio transceiver apparatus with booster**
Funksendeempfangsgerät mit Verstärker
Dispositif d'émission et de réception radio avec amplificateur du type booster

(30) Priority: 24.02.1992 US 840330
(43) Date of publication of application: 01.09.1993
(73) Proprietor: NOKIA MOBILE PHONES LTD., 24101 Salo (FI)
(72) Inventor: Lonka, Pekka Sakari, SF-24240 Salo (FI)
(74) Representative: Frain, Timothy John

(56) References cited:
- EP-A- 0 392 132
- DE-A- 1 466 555
- PATENT ABSTRACTS OF JAPAN vol. 387, no. 14 (E-967)21 August 1990 & JP-A-21 42 229

## Description

The invention relates to a circuit arrangement for controlling the amplification provided by a radio telephone booster.

In cellular radio telephone networks portable radio telephones have a low transmitting power, due to the limitations posed by the small size and weight, and also because the user should not be subjected to excessive radiofrequency radiation levels. When a portable radio telephone is used e.g. in a vehicle, it is usually connected to the vehicle antenna through an external power amplifier, a so called booster amplifier or 'booster'. The booster amplifies the radio frequency signal transmitted from the portable radio telephone, so that the signal transmitted via the vehicle antenna will be within a preselected power level range. The booster is used to extend the range of the radio telephone, i.e. to increase the distance from a base station, still providing an acceptable radio service level to the user of the portable radio telephone.

The booster is usually mounted in a vehicle, e.g. a car or a boat, and provided with a vehicle antenna mounted at a suitable location on the vehicle surface and connected to the booster with a coaxial cable. The booster is usually also connected with a second coaxial cable to an adaptor, in which the portable radio telephone maybe placed when used in the vehicle.

A typical prior art booster comprises a duplex filter, which connects the coaxial cable from the portable radio telephone to transmitting and receiving power amplifiers respectively, and a second duplex filter, which connects said power amplifiers to the vehicle coaxial cable. The signal path through the booster is thus a four wire connection, so that power amplification can be realized in both directions.

The booster further comprises a power control circuit. Cellular radio networks usually specify an adaptive power level control, so that the vehicle antenna transmit signal level is set to a level according to predefined rules, e.g. in accordance with a control signal received from a base station. Accordingly the power control circuit controls the transmit power amplifier output level. Due to cost reasons it is not considered advantageous to provide the booster with complete receiving circuits for the detection of the control signal. The detection of the control signal is provided in the mobile phone, and then sent to the booster power control circuit.

In prior art circuit arrangements the control signal is sent to the booster either through an unshielded conductor or through a shielded conductor. Both of these methods provide an efficient control of the booster power. However, both methods have serious drawbacks. In the portable radio telephone an unshielded conductor requires a corresponding connector, where the signal has to be filtered according to electromagnetic compatibility (EMC) requirements, and also the adaptor has to be provided with a corresponding connector. Then the booster also requires a corresponding connector and filtering.

A separate shielded cable, usually a coaxial cable, requires corresponding coaxial connectors, where the shield must be connected to equipment earth. This is a difficult task in the portable radio telephone which often has no metallic body. Extra connectors are not convenient nor desirable in cellular radio telephone design as they are expensive and require a space which is large compared to the rest of the phone structure.

Patent Abstracts of Japan, vol. 387, No. 14 (E-967) and EP 0 392 132 disclose a combination of a radio transceiver and a booster in which the power level of the booster is controlled using the voltage level of the signal received from the transceiver for transmission by the booster.

According to the present invention there is provided a circuit arrangement for controlling amplification by a radio telephone booster of a signal transmitted to the booster through RF coupling means from a radio telephone, the circuit arrangement comprising a power control circuit in the radio telephone and a power control circuit in the booster, characterised in that: the power control circuit in the radio telephone is adapted to produce a low frequency power control signal, the power control circuit in the radio telephone and the power control circuit in the booster are coupled through the RF coupling means to enable the transmission of the low frequency power control signal from the power control circuit in the radio telephone to the power control circuit in the booster, and the power control circuit in the booster is adapted to receive the low frequency power control signal and control the amplification in accordance with the low frequency power control signal.

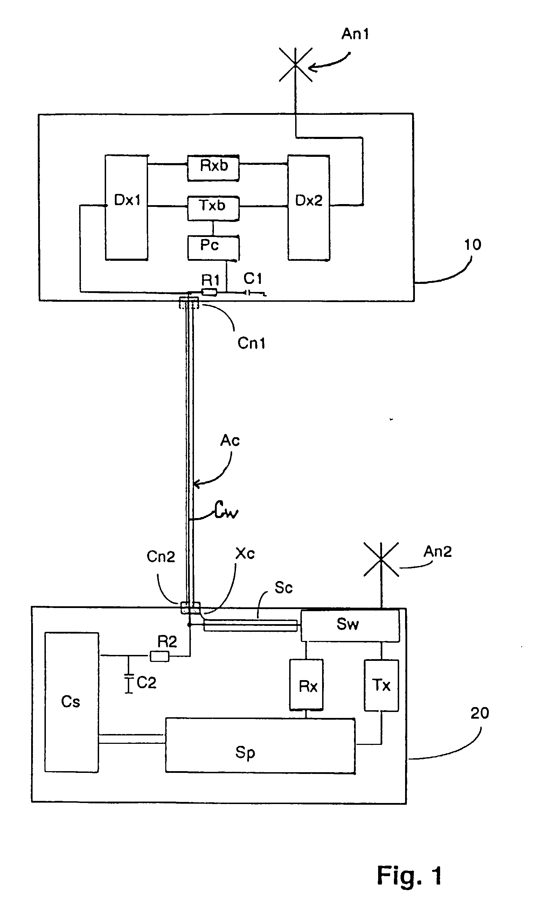

An embodiment of the invention is described, by way of example, with reference to the accompanying drawing which is a schematic block diagram of a portable radio telephone coupled to a booster in accordance with the present invention.

The booster 10 is in this example may be mounted in a car (not shown) and provided with a car antenna An1 mounted outside the car and connected to the booster with RF coupling means (not shown). The booster is usually also connected with a second RF coupling means normally a coaxial cable to an adaptor (not shown), in which the portable radio telephone 20 is placed, when used in a car.

The booster comprises a duplex filter Dx1, which connects the coaxial cable Ac from the portable radio telephone to a three stage transmitting power amplifier Txb and to a one stage receiving amplifier Rxb, respectively, and a second duplex filter Dx2, which connects said power amplifiers to the car antenna An1. The signal path through the booster 10 is thus a four wire connection, so that the power amplification can be realized in both transmit and receive directions. The booster further comprises a power control circuit Pc, which controls the transmit power amplifier Txb output level. The coaxial cable Ac is connected to the booster through the coaxial connector Cn1 and to the portable radio telephone 20 through the coaxial connector Cn2.

The portable radio telephone 20 comprises a block Sw containing a duplex filter and an antenna switch, connecting the antenna output of the duplex filter to the portable radio telephone antenna An2, or in booster operation via a coaxial connection Sc and connector Cn2 to the coaxial cable Ac. The coaxial shields are connected together, as is indicated at Xc. The portable radio telephone further comprises transmitter Tx and receiver Rx blocks, connected between the duplex filter and a block Sp containing signal processing and synthesizing circuits. The operation is controlled by a control circuit Cs, which may be realized as a microprocessor with known auxiliary circuits.

In accordance with the invention the antenna cable circuit arrangement comprises a low pass filter at each end of the coaxial cable Ac. The low pass filter in the portable radio telephone 20 comprises a resistor R2 and a capacitor C2, one leg of which is connected to the signal earth. The other leg of the capacitor C2 is connected to the output of the control circuit Cs and also to one leg of the resistor R2. The other leg of the resistor R2 is connected to the connection point between the center conductors Cw of the antenna cable and the coaxial connection Sc.

In the booster 10 the filter is arranged in a similar way. The low pass filter comprises a resistor R1 and a capacitor C1 one leg of which is connected to the signal earth. The other leg of the capacitor C1 is connected to the input of the control circuit Pc and also to one leg of the resistor R1. The other leg of the resistor R1 is connected to the connection point between the center conductor Cw of the antenna cable and the connection to the duplex filter Dx1.

In operation the control circuit Cs receives via receiver Rx a power level information signal from the base station, or alternatively the user of the portable radio telephone 20 may input information to that effect, which is processed in accordance with a suitable algorithm to produce a power control signal. A low frequency power control signal is output to the block Sp in handheld use, and in booster operation through the filter R2/C2, through the center conductor Cw of the coaxial cable Ac to the booster 10.

The booster receives the control signal through the filter R1/C1 at the control circuit Pc input. In accordance with the control signal the control circuit Pc outputs a signal to the amplifier stages, thus setting the transmit level as required.

The frequency of the control signal is substantially lower than the frequency of the transmission signal, so that the filters R1/C1 and R2/C2 will pass the control signal but substantially filter off the transmission signal. The frequency of the transmission signal may be e.g. between 890 MHz and 960 MHz. Correspondingly the capacitors found in the transmission signal path and in the amplifier circuits are in the order of pico-Farads or tens of pico-Farads, which ensures an adequate attenuation of the low frequency control signal.

The circuit arrangement in accordance with the invention does not require any extra connections, as it uses the existing coaxial cable Ac and connectors Cn1, Cn2. The antenna cable has to be adequately shielded and connected, so that the EMC requirements are fulfilled. The addition of the control signal does not change this requirement. No extra filtering is required, as would be the case with a separate cable. The inventive concept requires small filter circuits in the portable radio telephone 20 and in the booster 10. As these are realized as low-cost resistive/capacitive low pass filters, they require a very small space, e.g. as an integrated element on the printed board.

In view of the foregoing it will be clear to a person skilled in the art that modifications may be incorporated without departing from the scope of the present claims.

## Claims

1. A circuit arrangement for controlling amplification by a radio telephone booster (10) of a signal transmitted to the booster (10) through RF coupling means from a radio telephone (20), the circuit arrangement comprising a power control circuit (Cs) in the radio telephone (20) and a power control circuit (Pc) in the booster,
characterised in that:
the power control circuit (Cs) in the radio telephone is adapted to produce a low frequency power control signal, the power control circuit (Cs) in the radio telephone and the power control circuit (Pc) in the booster are coupled through the RF coupling means to enable the transmission of the low frequency power control signal from the power control circuit (Cs) in the radio telephone to the power control circuit (Pc) in the booster, and the power control circuit (Pc) in the booster is adapted to receive the low frequency power control signal and control the amplification in accordance with the low frequency power control signal.

2. circuit arrangement according to claim 1
**characterized** in that the RF coupling means comprises a coaxial cable (Ac) having a central signal conductor (Cw).

3. A circuit arrangement according to claim 1 or 2,
**characterized** in that a low pass filter is disposed between the signal conductor (Cw) and the control circuit (Cs) in the radio telephone, and a low pass filter is disposed between the signal conductor (Cw) and the control circuit (Pc) in the booster, the filters passing the control signal but substantially attenuating the transmission signal.

4. A circuit arrangement according to claim 3,
**characterized** in that the or each low pass filter comprises resistance means (R1; R2) and capacitance means (C1; C2).

5. A circuit arrangement according to claim 3,
**characterized** in that the or each low pass filter is formed as part of an integrated circuit.

## Patentansprüche

1. Schaltungsanordnung zur Steuerung der Verstärkung eines Signals mittels eines Funktelefonverstärkers (10), das über RF-Kopplungsmittel von einem Funktelefon (20) an den Verstärker (10) gesendet wird, mit einer Leistungssteuerungsschaltung (Cs) im Funktelefon (20) und einer Leistungssteuerungsschaltung (Pc) im Verstärker, **dadurch gekennzeichnet**, daß die Leistungssteuerungsschaltung (Cs) im Funktelefon ein tieffrequentes Leistungssteuerungssignal erzeugt, die Leistungssteuerungsschaltung (Cs) im Funktelefon und die Leistungssteuerungsschaltung (Pc) im Verstärker über die RF-Kopplungsmittel gekoppelt sind, um das Senden des tieffrequenten Leistungssteuerungssignals von der Leistungssteuerungschaltung (Cs) im Funktelefon an die Leistungssteuerungsschaltung (Pc) im Verstärker zu ermöglichen, und die Leistungssteuerungsschaltung (Pc) im Verstärker das tieffrequente Leistungssteuerungssignal empfängt und gemäß diesem die Verstärkung steuert.

2. Schaltungsanordnung nach Anspruch 1, **dadurch gekennzeichnet**, daß die RF-Kopplungsmittel ein Koaxialkabel (Ac) mit einem mittigen Signalleiter (Cw) enthalten.

3. Schaltungsanordnung nach Anspruch 1 oder 2, **dadurch gekennzeichnet**, daß zwischen dem Signalleiter (Cw) und der Steuerschaltung (Cs) im Funktelefon sowie zwischen dem Signalleiter (Cw) und der Steuerschaltung (Pc) im Verstärker jeweils ein Tiefpassfilter angeordnet ist, wobei die Filter das Steuersignal durchlassen, das Sendesignal jedoch erheblich dämpfen.

4. Schaltungsanordnung nach Anspruch 3, **dadurch gekennzeichnet**, daß die jeweiligen Tiefpassfilter Widerstandsmittel (R1;R2) und kapazitive Mittel (C1;C2) enthalten.

5. Schaltungsanordnung nach Anspruch 3, **dadurch gekennzeichnet**, daß das jeweilige Tiefpassfilter als Teil einer integrierten Schaltung ausgebildet ist.

## Revendications

1. Disposition de circuits pour commander l'amplification par un booster de radio téléphone (10) d'un signal transmis vers le booster (10) par l'intermédiaire d'un moyen de couplage radiofréquence en provenance d'un radio téléphone (20), la disposition de circuits comprenant un circuit de commande de puissance (Cs) dans le radio téléphone (20) et un circuit de commande de puissance (Pc) dans le booster,
caractérisée en ce que :
le circuit de commande de puissance (Cs) dans le radio téléphone est prévu pour produire un signal de commande de puissance à basse fréquence, le circuit de commande de puissance (Cs) dans le radio téléphone et le circuit de commande de puissance (Pc) dans le booster sont couplés par l'intermédiaire de moyen de couplage radiofréquence pour permettre la transmission du signal de commande de puissance à basse fréquence à partir du circuit de commande de puissance (Cs) dans le radio téléphone au circuit de commande de puissance (Pc) dans le booster et le circuit de commande de puissance (Pc) dans le booster est prévu pour recevoir le signal de commande de puissance à basse fréquence et commander l'amplification en conformité avec le signal de commande de puissance à basse fréquence.

2. Disposition de circuits selon la revendication 1, caractérisée en ce que le moyen de couplage radiofréquence comprend un câble coaxial (Ac) ayant un conducteur de signal central (Cw).

3. Disposition de circuits selon la revendication 1 ou 2, caractérisée en ce qu'un filtre passe-bas est disposé entre le conducteur de signal (Cw) et le circuit de commande (Cs) dans le radio téléphone et un filtre passe-bas est disposé entre le conducteur de signal (Cw) et le circuit de commande (Pc) dans le booster, les filtres laissant passer le signal de commande mais atténuant nettement le signal de transmission.

4. Disposition de circuits selon la revendication 3, caractérisée en ce que le filtre passe-bas ou chaque filtre passe-bas comprend des moyens de résistance (R1 ; R2) et des moyens de capacité (C1 ; C2).

5. Disposition de circuits selon la revendication 3, caractérisée en ce que le filtre passe-bas ou chaque filtre passe-bas est formé comme une partie d'un circuit intégré.
